(19) Europäisches Patentamt
European Patent Office
Office européen des brevets

(11) **EP 2 509 137 B1**

(12) **EUROPEAN PATENT SPECIFICATION**

(45) Date of publication and mention
of the grant of the patent:
**13.11.2013 Bulletin 2013/46**

(51) Int Cl.:
*H01M 2/16* (2006.01)     *H01M 10/0525* (2010.01)
*H01M 10/0569* (2010.01)

(21) Application number: **12162573.5**

(22) Date of filing: **30.03.2012**

(54) **Binder for separator of non-aquaous electrolyte battery comprising 2-cyanoethyl group-containing polymer and separator and battery using the same**

Bindemittel für eine Trennvorrichtung einer nicht wässrigen Elektrolytbatterie, enthaltend 2-Cyanoethyl-gruppenhaltiges Polymer und Trennvorrichtung und Batterie, die dieses verwenden

Liant pour séparateur de batterie à électrolyte non aqueux comprenant un polymère contenant un groupe 2-cyanoéthyle et séparateur et pile l'utilisant

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.04.2011 JP 2011084065**

(43) Date of publication of application:
**10.10.2012 Bulletin 2012/41**

(73) Proprietors:
• **Shin-Etsu Chemical Co., Ltd.**
**Chiyoda-ku**
**Tokyo 100-0004 (JP)**
• **Matsugaki Chemical Industries Co., Ltd.**
**Osaka-shi, Osaka 530-0043 (JP)**

(72) Inventors:
• **HAYAKAWA, Kazuhisa**
**Joetsu-shi, Niigata 942-8601 (JP)**
• **FUKUI, Ikuo**
**Joetsu-shi, Niigata 942-8601 (JP)**
• **TANIOKA, Soji**
**Chiyoda-ku, Tokyo 100-0004 (JP)**
• **OHGATA, Masahiro**
**Osaka-shi, Osaka 530-0043 (JP)**
• **KAJITANI, Masaaki**
**Osaka-shi, Osaka 530-0043 (JP)**

(74) Representative: **Larcher, Dominique**
**Cabinet Vidon**
**16B, rue de Jouanet**
**Technopôle Atalante**
**35703 Rennes Cedex 7 (FR)**

(56) References cited:
**WO-A1-2006/068428     US-A1- 2011 064 988**

• **TSUTSUMI H ET AL: "High ionic conductive behavior of cyanoethylated polyvinylalcohol- and polyacrylonitrile-based electrolytes", SOLID STATE IONICS, NORTH HOLLAND PUB. COMPANY. AMSTERDAM; NL, NL, vol. 177, no. 26-32, 31 October 2006 (2006-10-31), pages 2683-2686, XP027895625, ISSN: 0167-2738 [retrieved on 2006-10-31]**

**Description**

BACKGROUND OF THE INVENTION

1. Field of the Invention

The present invention relates to a binder for a separator of a non-aqueous electrolyte battery, the binder comprising a 2-cyanoethyl group-containing polymer having specified storage elasticity; the separator of the non-aqueous electrolyte battery, the separator comprising the binder; and the non-aqueous electrolyte battery with improved heat resistance by the presence of the separator.

2. Description of the Related Art

Recently, as a power source for a mobile terminal such as that of a notebook computer or a cellular phone or as a power source for a hybrid car or an electric car, a non-aqueous electrolyte battery with high voltage and high energy density, in particular a lithium ion secondary battery, is getting the attention.
The non-aqueous electrolyte battery typified by a lithium ion secondary battery has high capacity and high energy density so that a large electric current flows at the time of internal short circuit or external short circuit of the battery. Thus, there is a problem that heat is generated in the battery due to Joule heat caused by short circuit, the battery is swelled due to gas generation accompanied with decomposition of an electrolyte solution, and properties of the battery are deteriorated.
According to a current lithium ion secondary battery, in order to resolve such a problem, a separator comprising a porous substrate having fine pores such as a polypropylene or polyethylene film is interposed between a negative electrode and a positive electrode. When the temperature increases owing to the heat generated by short circuit, the separator comprising the porous substrate melts to block the pores. As a result, movement of ions is inhibited so that the current does not flow and runaway of the battery is suppressed.
Because of wider use of a lithium ion secondary battery, a battery having higher heat resistance, in particular improved heat resistance at the time of internal short circuit has been currently required.
When the internal short circuit occurs, it is believed that the temperature increases to 600°C or higher at the short circuit region owing to local heat generation. Thus, in a conventional separator comprising a porous substrate having fine pores such as a polyolefin film, the separator is shrunken or melted by heat generated by the short circuit at the short circuit region so that the battery is exposed to dangers of fuming, ignition and explosion.
As a method for preventing the short circuit caused by heat shrinkage or heat melting of a separator and improving reliability of a battery, a multilayer separator comprising a heat-resistant porous layer on one or both surfaces (i.e., front and back surfaces) of a porous substrate having fine pores such as a polyethylene film is suggested (JP 2010-015917A; JP 2009-518809T, which is a National Phase Publication of WO 2007/066967; JP 2008-503049T, which a National Phase Publication of WO 2006/004366; and JP 2010-50076A). It is also disclosed that a 2-cyanoethyl group-containing polymer is used as a binder in a heat-resistant porous layer (JP 2009-518809T and JP 2008-503049T).

SUMMARY OF THE INVENTION

However, even for a separator comprising a 2-cyanoethyl group-containing polymer as a binder in a heat-resistant porous layer, further improvement for enhancing the heat-resistance of the heat-resistant porous layer by increasing adhesion for binding inorganic filler particles in an electrolyte solution is still required.
Under the above circumstances, an object of the invention is to provide a binder used for a heat-resistant porous layer comprised by a separator; the separator comprised by a non-aqueous electrolyte battery with improved heat resistance by using the binder; and the non-aqueous electrolyte battery comprising the separator.
As a result of intensive studies to solve the problem, the present inventors have found that when a 2-cyanoethyl group-containing polymer having specified storage elasticity in a specified mixed liquid is used as a binder according to claim 1 in a separator of a non-aqueous electrolyte battery, the separator comprising a heat-resistant porous layer with excellent mechanical strength even in an electrolyte solution can be obtained. The invention has been completed based on the findings.
According to the invention, provided is a binder for a separator of a non-aqueous electrolyte battery, the binder comprising at least a 2-cyanoethyl group-containing polymer having storage elasticity of 100 Pa or more in a mixed liquid of cyclic carbonate ester selected from the group consisting of ethylene carbonate, propylene carbonate and any combination thereof; a chain carbonate ester selected from the group consisting of ethyl methyl carbonate, dimethyl carbonate, diethyl carbonate and any combination thereof; and lithium phosphate hexafluoride.
In addition, according to the invention, provided is a separator of a non-aqueous electrolyte battery, the separator comprising at least a porous substrate and a heat-resistant porous layer, which comprises at least the binder and an inorganic filler.

According to the invention, provided is a non-aqueous electrolyte battery comprising at least the separator, a positive electrode, a negative electrode and an electrolyte solution.

According to the invention, a binder comprising a 2-cyanoethyl group-containing polymer with high elasticity can be provided. When the binder is comprised by the separator, a non-aqueous electrolyte battery with excellent heat resistance can be provided.

DETAILED DESCRIPTION OF THE PREFERRED EMBODIMENTS

Embodiments of the invention will be described in detail.

According to the invention, a binder for a separator of a non-aqueous electrolyte battery comprises a 2-cyanoethyl group-containing polymer having storage elasticity of 100 Pa or more, preferably 200 Pa or more in a mixed liquid of cyclic carbonate ester selected from the group consisting of ethylene carbonate, propylene carbonate and any combination thereof; chain carbonate ester selected from the group consisting of ethyl methyl carbonate, dimethyl carbonate, diethyl carbonate and any combination thereof; and lithium phosphate hexafluoride.

In general, a solution of a polymer in a solvent exhibits viscoelasticity and has both viscous and elastic properties. The storage elasticity is a quantified value of the degree of elastic property of the solution. A solution having an elastic property has higher storage elasticity.

The storage elasticity of the solution in which a polymer is dissolved is determined by intrinsic properties of the polymer, if the other conditions are the same. When a 2-cyanoethyl group-containing polymer having specified storage elasticity is used as a binder, not only the performance of the heat-resistant porous layer in a separator but also the performance of a battery can be improved.

The 2-cyanoethyl group-containing polymer is produced by Michael addition reaction between acrylonitrile and a polymer containing a hydroxyl group as shown in the following reaction formula:

$$Polym\text{-}OH + CH2=CH\text{-}CN \rightarrow Polym\text{-}O\text{-}CH_2\text{-}CH_2\text{-}CN$$

wherein Polym-OH represents a hydroxyl group-containing polymer and Polym-O-CH$_2$-CH$_2$-CN represents a 2-cyanoethyl group-containing polymer.

A solution of lithium salt in an organic solvent is used as an electrolyte solution of a non-aqueous electrolyte battery as described below, and is of various types and various combinations. For ensuring the stability of a battery, it would be idealistic to examine suitability of a binder in an electrolyte solution having every possible combination by measuring the storage elasticity of the electrolyte solution. However, since there are so many possible combinations for the electrolyte solution, it would be extremely cumbersome to carry out all the measurements.

On the other hand, a mixed liquid of the specified cyclic carbonate ester, the specified chain carbonate ester and lithium phosphate hexafluoride allows easy determination of whether or not the binder has high heat resistance in a common electrolyte solution without a problem such as ignition of a battery caused by melting or shrinking of a separator.

Further, any composition of the mixed liquid of the specified cyclic carbonate ester, the specified chain carbonate ester and lithium phosphate hexafluoride, can bring the same effect in the invention. For such reasons, the storage elasticity is measured by using a mixed liquid having a lithium phosphate hexafluoride (LiPF$_6$) concentration of 1.3 mol/L in which the lithium phosphate hexafluoride is dissolved in a mixture of ethylene carbonate, ethyl methyl carbonate and diethyl carbonate at a volume ratio of 1:1:1.

When the storage elasticity is less than 100 Pa, the 2-cyanoethyl group-containing polymer in the heat-resistant porous layer of a separator is dissolved or gelates in an electrolyte solution which is added. Even if it remains in a gel state, gel strength is insufficient so that the mechanical strength of the heat-resistant porous layer is lowered and the heat resistance of the battery is impaired. Although the upper limit of the storage elasticity is not specifically limited, it is preferably 10,000 Pa or less. When it is more than 10,000 Pa, the movement rate of lithium ions may be slowed and performance of a battery such as battery capacity or energy density may be deteriorated. The storage elasticity can be measured by using a rheometer. More specifically, the 2-cyanoethyl group-containing polymer is dissolved in the mixed liquid in such an amount that the concentration thereof becomes 10% by weight, placed between parallel plates each having a diameter of 25 mm, and subjected to measurement at 25°C under 10% distortion with angular frequency of 16 s$^{-1}$ to obtain the storage elasticity value.

Examples of the 2-cyanoethyl group-containing polymer include cyanoethyl polysaccharides such as cyanoethyl pullulan, cyanoethyl cellulose, cyanoethyl dihydroxypropyl pullulan, cyanoethyl hydroxyethyl cellulose, cyanoethyl hydroxypropyl cellulose and cyanoethyl starch; and cyanoethyl polyvinyl alcohol. In particular, cyanoethyl polyvinyl alcohol is preferable. Since cyanoethyl polyvinyl alcohol is a binder, which can form strong adhesion among inorganic filler particles and has flexibility, problems such as cracking do not easily occur when the separator is bent or folded.

The 2-cyanoethyl group-containing polymer can be produced, for example, by a method comprising the steps of dissolving a polymer containing a hydroxyl group in water, adding a catalyst such as caustic soda or sodium carbonate thereto, then adding acrylonitrile thereto, and carrying out the reaction at 0 to 60°C for 2 to 12 hours. Although acrylonitrile functions also as a solvent, a dilution solvent such as isopropyl alcohol, methyl ethyl ketone, acetone or the other solvent, which does not react with acrylonitrile, may be optionally added. After the reaction is over, the reaction solution is separated into two phases of an aqueous phase and an organic phase containing the 2-cyanoethyl group-containing polymer. The organic phase was collected and subjected to addition of water to allow the crude product to precipitate. The precipitated crude product may be washed with a great amount of water or repeatedly subjected to re-dissolution/re-precipitation to obtain the purified 2-cyanoethyl group-containing polymer.

For example, the cyanoethyl polyvinyl alcohol having storage elasticity of 100 Pa or more can be produced by the following method. Polyvinyl alcohol is dissolved in water to form an aqueous 10 to 30% by weight solution; an aqueous 5 to 25% by weight caustic soda solution is added thereto while stirring the aqueous polyvinyl alcohol solution; and acrylonitrile as a cyanoethylating agent is added thereto for a cyanoethylation reaction. As a result, the cyanoethyl polyvinyl alcohol having storage elasticity of 100 Pa or more can be prepared.

The polyvinyl alcohol preferably has a polymerization degree of 550 to 3000. When the polymerization degree is less than 550, the storage elasticity may become lower than 100 Pa. When the polymerization degree is more than 3000, the storage elasticity may become higher than 10,000 Pa.

The polymerization degree means a viscosity-average polymerization degree. When the saponification degree of the polyvinyl alcohol-based polymer is less than 99.5 mol%, the polymerization degree is measured by the method comprising the steps of carrying out saponification until the saponification degree of 99.5 mol% or more is obtained; subjecting to re-acetylation by using acetic anhydride and pyridine to form polyvinyl acetate; and then measuring limiting viscosity $[\eta]$ (g/dL) of the polyvinyl acetate in accordance with the method for measuring an average polymerization degree as described in JIS K-6725.

Further, the ratio of replacement by cyanoethyl groups in the 2-cyanoethyl group-containing polymer may be 30% or more, preferably 40% or more. When the ratio of replacement by cyanoethyl groups is less than 30%, the permittivity is lowered so that sufficient ion conductivity may not be obtained. Further, solvent solubility is lowered and the viscosity of the slurry used for forming a heat-resistant porous layer becomes low so that dripping may occur when it is coated on a surface of the porous substrate.

The ratio of replacement by cyanoethyl groups can be represented by the ratio (%) of mole number of hydroxyl groups replaced by cyanoethyl groups to mole number of hydroxyl groups per monomer unit of a hydroxyl group-containing polymer, which is a starting raw material. The ratio of replacement by 2-cyanoethyl groups can be calculated based on the nitrogen content in the 2-cyanoethyl group-containing polymer as measured by Kjeldahl method.

The viscosity (at 20°C) of a 20% by weight 2-cyanoethyl group-containing polymer solution containing N,N-dimethylformamide as a solvent is preferably 150 to 500 mPa·s, particularly preferably 200 to 400 mPa·s. When the viscosity is lower than 150 mPa·s, viscosity of the slurry which is used for forming a heat-resistant porous layer may be lowered so that large dripping may occur when a surface of a porous substrate is coated with the slurry. When the viscosity is higher than 500 mPa·s, the viscosity of the slurry may become excessively large so that it may be difficult to coat a surface of a porous substrate with the slurry.

The viscosity can be controlled to be within a desired range by adjusting the ratio of replacement by cyanoethyl groups in the 2-cyanoethyl group-containing polymer, or the polymerization degree of a hydroxyl group-containing polymer as a starting material.

As for a binder for forming a heat-resistant porous layer, the 2-cyanoethyl group-containing polymer may be used alone, or optionally mixed with a binder resin such as ethylene-vinyl acetate copolymer (EVA, containing 20 to 35 mol% of repeating unit derived from vinyl acetate), acrylate copolymer, styrene butadiene rubber (SBR), polyvinyl butyral (PVB), polyvinyl pyrrolidone (PVP), polyurethane, poly(vinylidene fluoride-hexafluoropropylene) copolymer, poly(vinylidene fluoride-trichloroethylene) copolymer, poly(vinylidene fluoride-chlorotrifluoroethylene) copolymer, poly(vinylidene fluoride-hexafluoropropylene) copolymer, poly(vinylidene fluoride-trichloroethylene) copolymer, cellulose acetate, cellulose acetate butyrate or cellulose acetate propionate. When it is mixed with the binder resin, 10 to 1000 parts by weight of the binder resin relatively to 100 parts by weight of the 2-cyanoethyl group-containing polymer can be used.

The heat-resistant porous layer comprises an inorganic filler and the binder described above, and has many pores resulting from the voids present among inorganic filler particles.

The inorganic filler is not particularly limited insofar as it has a melting point of 200°C or more, a high electric insulation, electrochemical stability and stability in an electrolyte solution or a solvent used for slurry for forming the heat-resistant porous layer. Examples of the inorganic filler include particles of inorganic oxides such as iron oxide, $SiO_2$ (silica), $Al_2O_3$ (alumina), $TiO_2$, $BaTiO_3$, ZrO, $Pb(Mg_3Nb_{2/3})O_3$-$PbTiO_3$ (PMN-PT), hafnia ($HfO_2$), $SrTiO_3$, $SnO_2$, $CeO_2$, MgO, NiO, CaO, ZnO, $ZrO_2$ and $Y_2O_3$; particles of inorganic nitrides such as aluminum nitride and silicon nitride; particles of poorly soluble ionic crystals such as calcium fluoride, barium fluoride and barium sulfate; particles of covalent crystals such as silicone and diamond; particles of clay such as talc and montmorillonite; a material derived from a mineral such as boehmite, zeolite, apatite, kaolin, mullite, spinel, olivine, sericite and bentonite, or lithium titanium phosphate ($Li_xTi_y(PO_4)_3$, wherein x and y are numbers satisfying $0 < x < 2$ and $0 < y < 3$, respectively); and any combination thereof.

The particle diameter of the inorganic filler is not particularly limited. The mean particle diameter ranges preferably from 5 nm to 5 $\mu$m, more preferably from 0.01 to 1 $\mu$m in view of formation of a heat-resistant porous layer having a uniform thickness and formation of an appropriate void ratio. The mean particle diameter can be measured by a device based on a laser diffraction scattering method. When the mean particle diameter of the inorganic filler is less than 5 nm, dispersibility of the inorganic filler is lowered so that it may be difficult to control the physical properties of the separator. When it is more than 5 $\mu$m, strength of the heat resistant-porous layer is lowered so that the layer becomes brittle and smoothness of the surface tends to get deteriorated. In addition, a heat-resistant porous layer containing the same content of solid particles becomes thicker so that the mechanical properties are lowered.

A method for forming the heat-resistant porous layer is not particularly limited. For example, the heat-resistant porous layer may be formed by coating the porous substrate with a slurry in which an inorganic filler has been dispersed in a solution of a binder in a solvent, and by drying for removing the solvent.

The solvent for dissolving the binder is not particularly limited insofar as the binder is dissolved therein. Examples of the solvent include acetone, tetrahydrofuran, cyclohexanone, ethylene glycol monomethyl ether, methyl ethyl ketone, acetonitrile, furfuryl alcohol, tetrahydrofurfuryl alcohol, methyl acetoacetate, nitromethane, N,N-dimethylformamide (DMF), N-methyl-2-pyrrolidone, $\gamma$-butyrolactone and propylene carbonate. The solvent may be mixed, for example, in an amount of 300 to 5000 parts by weight relatively to 100 parts by weight of the binder.

As for the method for dispersing an inorganic filler in a binder solution, a known method of using a stirrer, a disperser, a pulverizer or the like can be employed. In particular, a ball mill method is preferable.

The mixture ratio of the inorganic filler to the binder in slurry is not particularly limited. The thickness, the average pore diameter and the porosity of the final product of heat-resistant porous layer can be controlled by the mixture ratio. The inorganic filler content in the heat-resistant porous layer is preferably from 50% by weight to 95% by weight. When the inorganic filler content is less than 50% by weight, a pore portion in the heat resistant-porous layer becomes small so that the battery performance may be deteriorated or sufficient heat resistance may not be obtained. When it is more than 95% by weight, the heat resistant-porous layer may become brittle so that it may be difficult to handle.

The heat-resistant porous layer can have low resistance because the pores ensure a route for ionic conduction. The average pore diameter is not particularly limited insofar as they are large enough for the lithium ions contained in the electrolyte solution described below to pass through. The average pore diameter ranges preferably from 5 nm to 5 $\mu$m, particularly preferably from 0.1 to 3 $\mu$m from the viewpoint of mechanical strength of the heat resistant porous layer. The porosity ranges preferably from 5 to 95%, particularly preferably from 20 to 70%. The average pore diameter can be measured by using a mercury intrusion porosimeter in the same manner as described for the porous substrate. The porosity is calculated based on the following formula, after obtaining true density (d) of an inorganic filler, volume (v) of a heat-resistant porous layer and weight (m) of a heat-resistant porous layer.

$$\text{Porosity } (\%) = \{1 - m/(v \times d)\} \times 100$$

The heat-resistant porous layer having a porosity of 5 to 95% and an average pore diameter of 5 nm to 5 $\mu$m can be obtained by controlling the particle diameter of inorganic particles or the weight ratio of inorganic particles to the binder.

According to the invention, the separator of a non-aqueous electrolyte battery comprises a porous layer and a heat-resistant porous layer, which comprises the binder and an inorganic filler. The heat-resistant porous layer is formed on one or both surfaces of the porous substrate and preferably comprises many pores based on voids among inorganic filler particles. When the heat-resistant porous layer is formed on one surface of the porous substrate, the heat-resistant porous layer may be formed on any side of the positive electrode surface side and the negative electrode surface side.

The porous substrate is not particularly limited and may be a thermoplastic resin which can melt to close the pores in the porous substrate and block ion movement so that an electric current can stop and excess heat or ignition of the battery can be suppressed, for example, when the temperature becomes higher than a certain limit. Examples of the porous substrate include substrates of polyolefins such as low density polyethylene, high density polyethylene, ultra high molecular weight polyethylene and polypropylene; polyesters such as polyethylene terephthalate and polybutylene terephthalate; polyacetal; polyamide; polycarbonate; polyimide; polyether ether ketone; polyether sulfone; and any combination of thereof.

The porous substrate is preferably a film. Although the thickness of the porous substrate is not particularly limited, it preferably ranges from 2 to 50 $\mu$m. When it is less than 2 $\mu$m, the mechanical properties may not be maintained. When it is more than 50 $\mu$m, it may function as a resistant layer. Although the average pore diameter and the porosity of the porous substrate are not particularly limited, the average pore diameter is preferably ranges from 0.1 to 30 $\mu$m and the porosity is preferably ranges from 10 to 90%. The porosity means the volume ratio of pores in a porous substrate. When the average pore diameter is less than 0.1 $\mu$m and the porosity is less than 10%, ion conductivity may be lowered. When the average pore diameter is more than 30 $\mu$m and the porosity is higher than 90%, the mechanical strength may be lowered so that the function as a substrate may not be attained. The average pore diameter can be measured in the same manner as that for the heat-resistant porous layer. The porosity is calculated based on the following formula, after obtaining true density (d) of the porous substrate, volume (v) of the porous substrate, and weight (m) of the porous substrate.

$$\text{Porosity (\%)} = \{1 - m/(v \times d)\} \times 100$$

A method of coating the porous substrate with the slurry includes a coating method commonly used in the art, and is not particularly limited insofar as a desirable film and coating area can be achieved. Examples of the method include a gravure coater method, a reverse roll coater method, a transfer roll coater method, a kiss coater method, a dipping coater method, a knife coater method, an air doctor coater method, a blade coater method, a rod coater method, a squeeze coater method, a cast coater method, a die coater method, a screen printing method and a spray coating method.

According to the invention, the total thickness of the separator, which is thus obtained is not particularly limited and can be adjusted in consideration of the battery performance. It is preferably in the range of 2 to 55 $\mu$m to ensure separation between a positive electrode and a negative electrode.

According to the invention, the non-aqueous electrolyte battery comprises a positive electrode, a negative electrode, a separator as described above and an electrolyte solution. More specifically, the separator placed between a positive electrode and a negative electrode is immersed in an electrolyte solution to produce a non-aqueous electrolyte battery. The separator comprising a heat-resistant porous layer formed on a surface of a porous substrate may be placed in such a manner that a surface of the heat-resistant porous layer side faces any side of the positive electrode and negative electrode. According to the invention, preferred examples of the non-aqueous electrolyte battery include a lithium secondary battery such as a lithium metal secondary battery, a lithium ion secondary battery, a lithium polymer secondary battery, or a lithium ion polymer secondary battery.

According to the invention, the electrode, which can be used with the separator is generally produced by coating an electrode current collector with a dispersion of an electrode active material and an electroconductive aid in a binder solution.

A positive electrode active material can include a lithium-containing transition metal oxide having a layer structure, typified by the chemical formula of $Li_{1+X}MO_2$ wherein $-0.1 < x < 0.1$ and M is Co, Ni, Mn, Al, Mg, Zr, Ti, Sn or the like; a lithium manganese oxide having a spinel structure such as $LiMn_2O_4$ or a composition having part of the elements in $LiMn_2O_4$ substituted with one or more of the other elements; and an olivine type compound represented by $LiMPO_4$ wherein M is Co, Ni, Mn, Fe or the like. Specific examples of the lithium-containing transition metal oxide having a layer structure include $LiCoO_2$, $LiNi_{1-x}Co_{x-y}Al_yO_2$ wherein $0.1 \leq x \leq 0.3$ and $0.01 \leq y \leq 0.2$, and an oxide containing at least Co, Ni and Mn such as $LiMn_{1/3}Ni_{1/3}Co_{1/3}O_2$, $LiMn_{5/12}Ni_{5/12}Co_{1/6}O_2$ and $LiNi_{3/5}Mn_{1/5}Co_{1/5}O_2$.

A negative electrode active material includes a lithium metal, a lithium alloy such as lithium aluminum alloy, a carbonaceous material which can store and release lithium, graphite, cokes such as a phenol resin and a furan resin, carbon fibers, glass-like carbon, pyrolytic carbon and active carbon.

A positive electrode current collector includes aluminum foil, nickel foil, and foil made of combination of aluminum and nickel. A negative electrode current collector includes copper foil, gold foil, nickel foil, copper alloy foil, and foil made of a combination of two or more selected from copper, gold, nickel and copper alloy.

An electroconductive aid which can be used for producing an electrode by using the electrode active material includes carbon black such as acetylene black and ketjen black, metal fibers such as aluminum fibers and nickel fibers, natural graphite, heat-expanding graphite, carbon fibers, ruthenium oxide and titanium oxide. Among these, acetylene black or ketjen black is preferable as it can provide desired conductivity with addition of a small amount thereof.

A binder, which can be used with the electroconductive aid can include various known binders. Examples of the binder include polytetrafluoroethylene, polyvinylidene fluoride, carboxymethyl cellulose, a cross-linked polymer of fluoroolefin copolymers, styrene-butadiene copolymer, polyacrylonitrile and polyvinyl alcohol. The binder may be dissolved in a solvent and used. Examples of the solvent include N-methyl-2-pyrrolidone (NMP).

As for the electrolyte solution, a solution in which a lithium salt is dissolved in an organic solvent can be used. The lithium salt is not particularly limited insofar as it dissociates in a solvent to form a $Li^+$ ion and does not easily cause a side reaction such as decomposition within the voltage range in which the battery is used. Examples of the lithium salt include an inorganic lithium salt such as $LiClO_4$, $LiPF_6$, $LiBF_4$, $LiAsF_6$, and $LiSbF_6$, and an organolithium salt such as

$LiCF_3SO_3$, $LiCF_3CO_2$, $Li_2C_2F_4(SO_3)_2$, $LiN(CF_3SO_2)_2$, $LiC(CF_3SO_2)_3$, $LiC_nF_{2n+1}SO_3$ ($n \geq 2$), and $LiN(RfOSO_2)_2$ wherein Rf represents a fluoroalkyl group. Preferred examples of the lithium salt include $LiPF_6$, $LiClO_4$, $LiAsF_6$, $LiBF_4$, $LiCF_3SO_3$ and $Li(CF_3SO_2)_2N$.

An organic solvent used for an electrolyte solution is not particularly limited insofar as it can dissolve the lithium salt and does not cause a side reaction such as decomposition within the voltage range in which the battery is used. Examples of the solvent include, but are not limited to, cyclic carbonate esters such as propylene carbonate and ethylene carbonate, chain carbonate esters such as ethyl methyl carbonate, diethyl carbonate, dimethyl carbonate and dipropyl carbonate, and a mixture thereof. When a mixture of the cyclic carbonate ester and the chain carbonate ester is used, a volume ratio of the cyclic carbonate ester to the chain carbonate ester ranges preferably from 4:1 to 1:4 to optimize the permittivity and viscosity.

According to the invention, a shape of the non-aqueous electrolyte battery can include a prism type or a cylindrical type in which a steel can or an aluminum can is used as a casing (i.e., can casing). Further, it can be a soft package battery, in which a laminate film having metal deposited is used as a casing.

EXAMPLES

The invention will be explained in more detail with respect to Examples and Comparative Examples. It should not be construed that the invention is limited to or by Examples.

<Synthetic Example 1>

30 parts by weight of polyvinyl alcohol having a polymerization degree of 1200 were mixed with 120 parts by weight of water until the polyvinyl alcohol was homogeneously dissolved therein. Then, 100 parts by weight of an aqueous 12.5% by weight caustic soda solution was added thereto and mixed until it was homogeneously mixed with the aqueous polyvinyl alcohol solution. Subsequently, 150 parts by weight of acrylonitrile and 120 parts by weight of isopropyl alcohol were added thereto and reacted at 30°C for 5 hours. Next, an aqueous 25% by weight acetic acid solution was added thereto so that the acetic acid was in the same molar amount as that of the caustic soda. After neutralization, water was added to the mixture under stirring to allow crude cyanoethyl polyvinyl alcohol to precipitate. The crude cyanoethyl polyvinyl alcohol was purified by repeating of washing with water and re-dissolution/re-precipitation. After drying, cyanoethyl polyvinyl alcohol was obtained.

<Synthetic Example 2>

Cyanoethyl polyvinyl alcohol was obtained in the same manner as in Synthetic Example 1 except that 120 parts by weight of acrylonitrile was added.

<Synthetic example 3>

Cyanoethyl polyvinyl alcohol was obtained in the same manner as in Synthetic Example 1 except that polyvinyl alcohol having a polymerization degree of 600 was used.

<Synthetic Example 4>

Cyanoethyl polyvinyl alcohol was obtained in the same manner as in Synthetic Example 1 except that polyvinyl alcohol having a polymerization degree of 1400 was used.

<Synthetic Example 5>

Cyanoethyl polyvinyl alcohol was obtained in the same manner as in Synthetic Example 1 except that polyvinyl alcohol having a polymerization degree of 2500 was used.

<Synthetic Example 6>

Cyanoethyl polyvinyl alcohol was obtained in the same manner as in Synthetic Example 1 except that the polyvinyl alcohol was added to and dissolved in a mixture in which the water and the aqueous caustic soda solution had been mixed; and then the acrylonitrile and the isopropyl alcohol were added thereto.

The cyanoethyl polyvinyl alcohols thus obtained were subjected to storage elasticity measurements by a method described below. The ratio of replacement by cyanoethyl groups was obtained based on the nitrogen content obtained by using the Kjeldahl method described below. The results are given in Table 1.

<Storage Elasticity>

Lithium phosphate hexafluoride (LiPF$_6$) was added to and dissolved in a mixed liquid of ethylene carbonate, ethyl methyl carbonate and diethyl carbonate at a volume ratio of 1:1:1 in such an amount that the concentration of the lithium phosphate hexafluoride became 1.3 mol/L. The cyanoethyl polyvinyl alcohol was added thereto and dissolved therein in such an amount that the concentration of the cyanoethyl polyvinyl alcohol became 10% by weight. The resulting mixture was left to stand for 24 hours and became a sample liquid. The storage stability elasticity of the sample liquid was measured by using a rheometer (Type MCR-500, manufactured by Anton Paar GmbH) under the following conditions. Measurement device: parallel plates, each having a diameter of 25 mm; measurement temperature: 25°C; measurement distortion: 10%; and measurement frequency: 16 s$^{-1}$. The results are shown in Table 1.

<Measurement of Nitrogen Content>

An accurately weighed sample in a Kjeldahl flask was subjected to addition of sulfuric acid, and further addition of potassium sulfate for increasing the boiling point of the liquid and copper sulfate as a catalyst for promoting decomposition, and stirred well. The flask was heated to allow the resulting solution to boil so that the reaction progressed. When the solution became transparent, the heating was stopped and the solution was left to stand until it cooled down to room temperature. The solution was alkalified by addition of sodium hydroxide and water, and then distilled. The distillate was introduced into an aqueous hydrogen chloride solution having a known concentration so that ammonia was absorbed. By the titration after addition of a pH indicator to the aqueous solution, the content of nitrogen present in the sample was obtained.

Table 1

| Sample | Polymerization degree | Storage elasticity (Pa) | Ratio of replacement by cyanoethyl groups (%) |
|---|---|---|---|
| Syn.Ex.1 | 1200 | 3449 | 75.7 |
| Syn.Ex.2 | 1200 | 1380 | 61.3 |
| Syn.Ex.3 | 600 | 251 | 71.5 |
| Syn.Ex.4 | 1400 | 5360 | 73.5 |
| Syn.Ex.5 | 2500 | 7765 | 72.4 |
| Syn.Ex.6 | 2400 | 65 | 28.4 |

It is evident in Table 1 that the storage elasticity varies depending on the polymerization degree of polyvinyl alcohol (particularly in Synthetic Examples 3 and 5), and the storage elasticity and the ratio of replacement by cyanoethyl groups vary depending on the addition amount of acrylonitrile (particularly in Synthetic Examples 1 and 2).
It is also evident that the storage elasticity is dramatically lowered when water and an aqueous caustic soda solution are mixed and then polyvinyl alcohol is added thereto and dissolved therein (in Synthetic Example 6).

<Example 1>

Production of Battery

The positive and negative electrodes which had been obtained in the method described below were wound together in whirlpool form while a separator is interposed therebetween to produce a winding electrode body. The resulting winding electrode body was flattened into a flat shape and placed in an aluminum can casing. After injection of a 1 mol/L electrolyte solution of lithium phosphate hexafluoride (LiPF$_6$) in a mixed solvent of ethylene carbonate and ethyl methyl carbonate (volume ratio of 2: 1), the can casing was sealed to produce a lithium ion secondary battery.

(a) Production of Separator
40 parts by weight of Al$_2$O$_3$ (alumina) was added to the solution obtained by dissolving 10 parts by weight of cyanoethyl polyvinyl alcohol obtained in Synthetic Example 1 in 190 parts by weight of methyl ethyl ketone, and mixed using a ball mill to prepare a slurry. Both surfaces of a polyethylene porous film having a thickness of 16 μm and a porosity (void ratio) of 40% were coated with the slurry prepared by using a dip coating method and dried to produce a separator. The thickness of the heat-resistant porous film was 5 $\mu$m after drying. The heat-resistant porous layer in the separator has an average pore diameter of 0.6 $\mu$m and a porosity of 65%. The average pore diameter was measured by using a mercury intrusion porosimeter (produced by Quantachrome Instruments). After obtaining the true density of the inorganic filler, volume of the heat-resistant porous layer and weight of the heat resistant porous layer, the porosity was calculated based on the formula described above. The true density of the inorganic filler was measured by using a device for measuring true density (produced by Seishin Kigyo Co., Ltd.).

(b) Production of Positive Electrode

85 parts by weight of lithium cobalt oxide ($LiCoO_2$) as a positive electrode active material, 10 parts by weight of acetylene black as an electroconductive aid, and 5 parts by weight of polyvinylidene fluoride (PVDF) as a binder were homogeneously mixed in 100 parts by weight of N-methyl-2-pyrrolidone (NMP) as a solvent to prepare a paste containing a positive electrode mix. Both surfaces of a current collector having a thickness of 15 $\mu$m were coated with the resulting paste containing a positive electrode mix. The current collector was made of an aluminum foil. After drying and calendaring, a positive electrode having a total thickness of 150 $\mu$m was produced. Further, an aluminum tab was welded on an exposed area of the positive electrode aluminum foil to form a lead portion.

(c) Production of Negative Electrode

95 parts by weight of graphite as a negative electrode active material and 5 parts by weight of PVDF as a binder were homogeneously mixed in 100 parts by weight of NMP as a solvent to prepare a paste containing a negative electrode mix. Both surfaces of a current collector having a thickness of 10 $\mu$m were coated with the resulting paste containing a negative electrode mix. The current collector was made of a copper foil. After drying and calendaring, a negative electrode having a total thickness of 142 $\mu$m was produced. Further, a nickel tab was welded on an exposed area of the negative electrode copper foil to form a lead portion.

<Example 2>

A lithium ion secondary battery was produced in the same manner as in Example 1 except that the separator was produced by using a mixture of 5 parts by weight of cyanoethyl polyvinyl alcohol of Synthetic Example 1 and 5 parts by weight of poly(vinylidene fluoride-chlorotrifluoroethylene) copolymer instead of 10 parts by weight of cyanoethyl polyvinyl alcohol of Synthetic Example 1, and a solution in which $LiClO_4$ was dissolved at a concentration of 1 mol/L in a mixed solvent of ethylene carbonate, propylene carbonate and dimethyl carbonate at a volume ratio of 2:1:1 was used as the electrolyte solution. The heat-resistant porous layer in the separator had a thickness of 5 $\mu$m, an average pore diameter of 0.4 $\mu$m and a porosity of 55%.

<Example 3>

A lithium ion secondary battery was produced in the same manner as in Example 1 except that a solution in which lithium arsenic hexafluoride ($LiAsF_6$) was dissolved at a concentration of 1 mol/L in a mixed solvent of ethylene carbonate, ethyl methyl carbonate and diethyl carbonate at a volume ratio of 1:2:1 was used as the electrolyte solution. The heat-resistant porous layer in the separator had a thickness of 5 $\mu$m, an average pore diameter of 0.3 $\mu$m and a porosity of 63%.

<Example 4>

A lithium ion secondary battery was produced in the same manner as in Example 1 except that a polyethylene terephthalate porous film having a thickness of 20 $\mu$m and a porosity (void ratio) of 70% was used instead of the polyethylene porous film, and aluminum nitride (AlN) was used instead of $Al_2O_3$ (alumina) to produce a separator. The heat-resistant porous layer in the separator had a thickness of 5 $\mu$m, an average pore diameter of 0.5 $\mu$m and a porosity of 65%.

<Example 5>

A lithium ion secondary battery was produced in the same manner as in Example 1 except that the separator was produced by using the cyanoethyl polyvinyl alcohol of Synthetic Example 2, and a solution in which $LiBF_4$ is dissolved at a concentration of 1 mol/L in a mixed solvent of ethylene carbonate, dimethyl carbonate and diethyl carbonate at a volume ratio of 1:1:1 was used as the electrolyte solution. The heat-resistant porous layer in the separator had a thickness of 5 $\mu$m, an average pore diameter of 1.3 $\mu$m and a porosity of 58%.

<Example 6>

A lithium ion secondary battery was produced in the same manner as in Example 1 except that the separator was produced by using the cyanoethyl polyvinyl alcohol of Synthetic Example 3, and a solution in which $LiCF_3SO_3$ was dissolved at a concentration of 1 mol/L in a mixed solvent of propylene carbonate, ethyl methyl carbonate and diethyl carbonate at a volume ratio of 1:1:1 was used as the electrolyte solution. The heat-resistant porous layer in the separator had a thickness of 5 $\mu$m, an average pore diameter of 0.2 $\mu$m and a porosity of 45%.

<Example 7>

A lithium ion secondary battery was produced in the same manner as in Example 1 except that the separator was produced by using the cyanoethyl polyvinyl alcohol of Synthetic Example 4, and a solution in which $LiN(CF_3SO_2)_2$ was dissolved at a concentration of 1 mol/L in a mixed solvent of ethylene carbonate, ethyl methyl carbonate and diethyl carbonate at a volume ratio of 1:1:2 was used as the electrolyte solution. The heat-resistant porous layer in the separator had a thickness of 5 $\mu$m, an average pore diameter of 0.8 $\mu$m and a porosity of 62%.

<Example 8>

A lithium ion secondary battery was produced in the same manner as in Example 1 except that the separator was produced by using the cyanoethyl polyvinyl alcohol of Synthetic Example 5. The heat-resistant porous layer in the separator had a thickness of 5 $\mu$m, an average pore diameter of 0.4 $\mu$m and a porosity of 53%.

<Comparative Example 1>

A lithium ion secondary battery was produced in the same manner as Example 1 except that the separator was produced by using the cyanoethyl polyvinyl alcohol of Synthetic Example 6. The heat-resistant porous layer in the separator had a thickness of 5 $\mu$m, an average pore diameter of 0.6 $\mu$m and a porosity of 48%.

<Evaluation of Battery>

<Evaluation of Heat Resistance>

The lithium ion secondary batteries produced in Examples 1 to 8 and Comparative Example 1 were left at 180°C for 1 hour and then examined. The batteries operated normally were evaluated as "good" and the battery not operated normally owing to short circuit was evaluated as "poor". The results are shown in Table 2.

<Evaluation of Load Characteristics>

Each of the lithium ion secondary batteries produced in Examples 1 to 8 and Comparative Example 1 was subjected to constant current-constant voltage charge, in which it was charged by a constant current with a current value of 0.2 C until the battery voltage reached 4.2 V, and then charged by a constant voltage of 4.2 V Total charging time to end of the charging was 15 hours. After charged, each battery was discharged at a discharge current of 0.2 C until the battery voltage reached 3.0 V, and then discharge capacity (i.e., 0.2 C discharge capacity) was measured.
Then, each battery was charged under the same condition as above, and then discharged at a discharge current of 2 C until the battery voltage reached 3.0 V, and then discharge capacity (i.e., 2 C discharge capacity) was measured. The ratio (i.e., load characteristics) of 2C discharge capacity to 0.2 C discharge capacity was examined for each battery. The charging and discharging were carried out at the ambient temperature of 20°C. The results are shown in Table 2.

Table 2

| | separator | | | electrolyte solution | | heat resistance [1] at 180 °C for 1 hour | load characteristics (%) |
|---|---|---|---|---|---|---|---|
| | heat-resistant porous film | binder | inorganic filler | solvent composition[2] | lithium salt | | |
| Example 1 | polyethylene | Syn Ex 1 | $Al_2O_3$ | EC/EMC=2·1 | $LiPF_6$ | good | 91 |
| Example 2 | polyethylene | Syn Ex 1 and fluorine-based resin | $Al_2O_3$ | EC/PC/DMC=2-1 | $LiClO_4$ | good | 92 |
| Example 3 | polyethylene | Syn Ex 1 | $Al_2O_3$ | EC/EMC/DEC=1 ·2·1 | $LiAsF_6$ | good | 91 |
| Example 4 | polyethylene telephthalate | Syn Ex 1 | AIN | EC/EMC=2·1 | $LiPF_6$ | good | 89 |
| Example 5 | polyethylene | Syn Ex 2 | $Al_2O_3$ | EC/DMC/DEC=1·1·1 | $LiBF_4$ | good | 93 |
| Example 6 | polyethylene | Syn Ex 3 | $Al_2O_3$ | PC/EMC/DEC=1·1·1 | $LiCF_3SO_3$ | good | 93 |
| Example 7 | polyethylene | Syn Ex 4 | $Al_2O_3$ | EC/EMC/DEC=1·1·2 | $LiN(CF_3SO_2)_2$ | good | 91 |
| Example 8 | polyethylene | Syn Ex 5 | $Al_2O_3$ | EC/EMC=2·1 | $LiPF_6$ | good | 88 |
| Comp Ex 1 | polyethylene | Syn Ex 6 | $Al_2O_3$ | EC/EMC=2·1 | $LiPF_6$ | poor | 73 |

1) "good" means that the battery operated normally, while "poor" means that the battery did not operate normally owing to short circuit
2) "EC" represents ethylene carbonate, "PC" represents propylene carbonate, "EMC" represents ethyl methyl carbonate, "DMC" represents dimethyl carbonate, and "DMC" represents diethyl carbonate

Lithium ion secondary batteries were produced by using the binders of Synthetic Examples 1 to 6, heat-resistant porous films and inorganic fillers commonly used in a separator, and solvent compositions and lithium salts commonly used as an electrolyte solution. The physical properties of the batteries were evaluated with respect to suitability of the binder for the battery, and the results are shown in Table 2.

It is evident based on the results that the binders of Synthetic Examples 1 to 5 have good compatibility with a fluorine-based resin (in Example 2) and can be used without any problem even when the heat-resistant porous film or the inorganic filler is changed (in Example 3).

Although solvent compositions and lithium salts for the electrolyte solution vary as shown in Examples 1 to 8, it is not necessary to evaluate each of their possible combinations with respect to the binder suitability. It is evident that when the binder has storage elasticity of at least certain value in a mixed liquid of specified certain cyclic carbonate ester, specified chain carbonate ester and lithium phosphate hexafluoride, it can be used in combination of a common electrolyte solution to provide a battery which operates normally and has good load characteristics (in Examples 1 to 8).

On the other hand, when a binder having storage elasticity value of less than the specified value is used, the battery does not operate normally owing to short-circuit caused by melting or shrinking of a separator (in Comparative Example 1).

It is evident based on the results that the binder of the invention can be combined with a common material or common electrolyte composition to produce a lithium ion secondary battery, and the battery obtained is proven to be excellent in stability and performance.

According to the invention, there can be provided a binder used for a heat-resistant porous layer in a separator; a separator comprising the binder for a non-aqueous electrolyte battery with improved stability; and a non-aqueous electrolyte battery comprising the separator.

**Claims**

1. Binder for a separator of a non-aqueous electrolyte battery, said binder comprising at least a 2-cyanoethyl group-containing polymer having storage elasticity of 100 Pa or more in a mixed liquid of cyclic carbonate ester selected from the group consisting of ethylene carbonate, propylene carbonate and any combination thereof; chain carbonate ester selected from group consisting of ethyl methyl carbonate, dimethyl carbonate, diethyl carbonate and any combination thereof; and lithium phosphate hexafluoride,
   wherein the 2-cyanoethyl group-containing polymer is cyanoethyl polyvinyl alcohol produced by an addition of a catalyst into an aqueous solution of polyvinyl alcohol and further an addition of acrylonitrile thereto for a reaction, wherein the polyvinyl alcohol has a polymerization degree of 550 to 3000, and wherein the ratio of cyano groups in the 2-cyanoethyl polyvinyl alcohol is 30% or more.

2. Separator of a non-aqueous electrolyte battery, said separator comprising at least:

   a porous substrate and
   a heat-resistant porous layer comprising at least the binder of Claim 1 and an inorganic filler.

3. Separator according to Claim 2, wherein the porous substrate is a substrate of polyolefin, polyester, polyacetal, polyamide, polycarbonate, polyimide, polyether ether ketone, polyether sulfone, or any combination thereof.

4. Separator according to Claim 3 or 4, wherein the inorganic filler is selected from the group consisting of inorganic oxides, inorganic nitrides, poorly soluble ionic crystals of calcium fluoride, barium fluoride and/or barium sulfate, covalent crystals of silicon and/or diamond, clay, a material derived from a mineral, lithium titanium phosphate represented by $Li_xTi_y(PO_4)_3$ wherein x and y are numbers satisfying $0<x<2$ and $0<y<3$, and any combination thereof.

5. Non-aqueous electrolyte battery comprising at least a separator of any one of Claims 2 to 4, a positive electrode, a negative electrode and an electrolyte solution.

6. Non-aqueous electrolyte battery according to Claim 5 wherein the electrolyte solution comprises at least cyclic carbonate ester selected from the group consisting of ethylene carbonate, propylene carbonate and any combination thereof; chain carbonate ester selected from the group consisting of dimethyl carbonate, ethyl methyl carbonate, diethyl carbonate, dipropyl carbonate and any combination thereof; and a lithium salt.

**Patentansprüche**

1. Bindemittel für einen Separator einer nicht-wässrigen Elektrolytbatterie, wobei das Bindemittel wenigstens ein 2-Cyanoethyl-gruppenhaltiges Polymer mit einer Speicherelastizität von 100 Pa oder mehr in einer Mischflüssigkeit aus zyklischem Carbonatester, der aus der Gruppe bestehend aus Ethylencarbonat, Propylencarbonat und jeder Kombination daraus gewählt wird; einem Kettencarbonatester, der aus der Gruppe bestehend aus Ethylmethylcarbonat, Dimethylcarbonat, Diethylcarbonat und jeder Kombination daraus gewählt wird; und Lithiumphosphat-Hexafluorid umfasst,
wobei das 2-Cyanoethyl-gruppenhaltige Polymer Cyanoethyl-Polyvinyl-Alkohol ist, der durch Zugabe eines Katalysators in eine wässrige Lösung aus Polyvinyl-Alkohol und durch weitere Zugabe von Acrylnitril zur Reaktion hergestellt wird, wobei der Polyvinyl-Alkohol einen Polymerisationsgrad von 550 bis 3000 aufweist, und wobei der Anteil von Cyanogruppen im 2-Cyanoethyl-Polyvinyl-Alkohol 30% oder mehr beträgt.

2. Separator einer nicht-wässrigen Elektrolytbatterie, wobei der Separator wenigstens Folgendes umfasst:

   ein poröses Substrat und
   eine hitzebeständige, poröse Schicht, umfassend wenigstens das Bindemittel nach Anspruch 1 und einen anorganischen Füllstoff.

3. Separator nach Anspruch 2, wobei das poröse Substrat ein Substrat aus Polyolefin, Polyester, Polyacetal, Polyamid, Polycarbonat, Polyimid, Polyetheretherketon, Polyethersulfon oder jeder Kombination daraus ist.

4. Separator nach Anspruch 3 oder 4, wobei der anorganische Füllstoff aus der Gruppe gewählt wird, bestehend aus anorganischen Oxiden, anorganischen Nitriden, schwach löslichen ionischen Kristallen von Calciumfluorid, Bariumfluorid und/oder Bariumsulfat, kovalenten Kristallen von Silicium und/oder Diamant, Ton, einem Stoff, abgeleitet von einem Mineral, Lithiumtitanphosphat, repräsentiert durch $Li_xTi_y(PO_4)_3$, wobei x und y Zahlen sind, die jeweils $0 < x < 2$ und $0 < y < 3$ erfüllen, und jeder Kombination daraus.

5. Nicht-wässrige Elektrolytbatterie, umfassend wenigstens einen Separator nach einem der Ansprüche 2 bis 4, eine positive Elektrode, eine negative Elektrode und eine Elektrolytlösung.

6. Nicht-wässrige Elektrolytbatterie nach Anspruch 5, wobei die Elektrolytlösung wenigstens zyklischen Carbonatester, der aus der Gruppe bestehend aus Ethylencarbonat, Propylencarbonat und jeder Kombination daraus gewählt wird; Kettencarbonatester, der aus der Gruppe bestehend aus Dimethylcarbonat, Ethylmethylcarbonat, Diethylcarbonat, Dipropylcarbonat und jeder Kombination daraus gewählt wird; und ein Lithiumsalz umfasst.


**Revendications**

1. Liant pour un séparateur de batterie à électrolyte non aqueux, ledit liant comprenant au moins un polymère contenant un groupe 2-cyanoéthyle possédant une élasticité de conservation de 100 Pa ou plus dans un liquide mixte d'ester de carbonate cyclique choisi dans le groupe constitué par le carbonate d'éthylène, le carbonate de propylène et n'importe quelle combinaison de ceux-ci , d'ester de carbonate en chaîne choisi dans le groupe constitué le carbonate d'éthyl méthyle, le carbonate de diméthyle, le carbonate de diéthyle et n'importe quelle combinaison de ceux-ci ; et d'hexafluorure de phosphate de lithium ;
dans lequel le polymère contenant un groupe de 2-cyanoéthyle est un alcool polyvinylique de cyanoéthyle fabriqué par ajout d'un catalyseur dans une solution aqueuse d'alcool polyvinylique et ajout d'acrylonitrile pour une réaction, dans lequel l'alcool polyvinylique a un degré de polymérisation de 550 à 3000, et dans lequel le rapport des groupes cyano dans l'alcool polyvinylique de 2-cyanoéthyle est de 30 % ou plus.

2. Séparateur de batterie à électrolyte non aqueux, ledit séparateur comprenant au moins :

   un substrat poreux et
   une couche poreuse thermorésistante comprenant au moins le liant selon la revendication 1 et une charge inorganique.

3. Séparateur selon la revendication 2, dans lequel le substrat poreux est un substrat de polyoléfine, polyester, polyacétal, polyamide, polycarbonate, polyimide, polyéther éther cétone, polyéther sulfone ou de n'importe quelle combinaison de ceux-ci.

4. Séparateur selon la revendication 2 ou 3, dans lequel la charge inorganique est choisie dans le groupe constitué d'oxydes inorganiques, de nitrures inorganiques, de cristaux ioniques faiblement solubles de fluorure de calcium, de fluorure de baryum et/ou de sulfate de baryum, de cristaux covalents de silicium et/ou de diamant, d'argile, d'une matière dérivée d'un minerai, de phosphate de lithium-titane représenté par $Li_xTi_y(PO_4)_3$, où x et y sont des nombres satisfaisant $0 < x < 2$ et $0 < y < 3$, et de n'importe quelle combinaison de ceux-ci.

5. Batterie à électrolyte non aqueux comprenant au moins un séparateur selon l'une quelconque des revendications 2 à 4, une électrode positive, une électrode négative et une solution électrolytique.

6. Batterie à électrolyte non aqueux selon la revendication 5, dans laquelle la solution électrolytique comprend au moins un ester de carbonate cyclique choisi dans le groupe constitué de carbonate d'éthylène, de carbonate de propylène et de n'importe quelle combinaison de ceux-ci , d'ester de carbonate en chaîne choisi dans le groupe constitué de carbonate de diméthyle, de carbonate d'éthyl méthyle, de carbonate de diéthyle, de carbonate de dipropyle et de n'importe quelle combinaison de ceux-ci ; et d'un sel de lithium.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010015917 A
- JP 2009518809 T
- WO 2007066967 A
- JP 2008503049 T
- WO 2006004366 A
- JP 2010050076 A